# EUROPEAN PATENT APPLICATION

(11) **EP 2 631 840 A1**
(43) Date of publication of application: **28.08.2013**
(21) Application number: 13154965.1
(22) Date of filing: 12.02.2013
(51) Int. Cl.: G06F 21/57, G06F 21/74, G06F 9/44

(54) **Authentication device and authentication method**

(30) Priority: 27.02.2012 JP 2012040189
(71) Applicant: Hitachi Ltd., Tokyo 100-8280 (JP)
(72) Inventor: Maya, Yuzuru, Chiyoda-ku, Tokyo 100-8220 (JP); Inokuchi, Shuji, Chiyoda-ku, Tokyo 100-8220 (JP)
(74) Representative: Moore, Graeme Patrick

(57) **Abstract**

An authentication OS is booted from the BIOS at the power up of an information processing apparatus then executes user authentication for the information processing apparatus, by performing an authentication process using devices initialized in its own mode. When the authentication is successful, the authentication OS writes a decryption key for an operation OS in a shared memory area and reboots the BIOS, while keeping the data in the shared memory area. The BIOS retrieves the operation OS decrypted with the decryption key for the operation OS into an OS operation area, thereafter the operation OS runs in a main memory.

## Description

### TECHNICAL FIELD

The present invention relates to an authentication device and authentication method.

### BACKGROUND OF INVENTION

Recently, the securities of information processing apparatus such as a personal computer (PC) are secured through variety of authentication functions in order to prevent unauthorized use thereof. However, the security threats are increasing year by year, thereby more reliable authentication functions are required than in the past.

A technique is described in Patent Literature 1 to authenticate by determining whether or not a system image to be loaded by an BIOS (Basic Input/Output System) at booting of the PC is authentic, using a digital signature associated with the system image. In this case, the hash value for the digital signature decrypted with the public key is compared with the hash value in the ROM. An interface for accessing a real device is modified to access a decrypted virtual device. If the system image is authentic, a virtual device is created and an OS (Operating System) stored in the system image is booted from the virtual device.

### PRIOR ART LITERATURE

Patent Literature:
1. Japanese Laid-Open Patent Application No. JP2006-172376

### SUMMARY OF INVENTION

### Description of Related Art

Note that it is often the case that user authentication is performed to allow only a specific user to use a PC and the other users not to use the PC. It is required for the user authentication to reduce the time and efforts of the authentication process until an authorized user can use the PC, in addition to improve security strength to eliminate unauthorized users.

However, PC security and ease of use are insufficient in the way that a BIOS performs an authentication process before booting the OS as in the technique described in Patent Literature 1, because a number of devices connected to the PC, such as a keyboard, a mouse, a display and a USB (Universal Serial Bus) equipment, cannot be used for authentication in the authentication process.

It is because a BIOS is a simple program to do preprocess before booting the OS, and is not designed for operating a high-load authentication processing but for running in 16-bit mode and recognizing minimum devices necessary for booting the OS.

In this regard the present invention is primarily intended to solve the problems described above and perform an efficient user authentication for booting the PC OS.

### Means for solving Problems

In order to solve the above problems, the present invention provides an authentication device, for running an operation OS based on the result of an authentication process that runs on an authentication OS, including:
a main memory having an OS operation area, in which the authentication OS and the operation OS are loaded, and a shared memory area, in which a decryption key of the operation OS obtained as a result of the authentication process is stored;
a disk device having each of a storage area for the authentication OS and a storage area for the operation OS that is stored in an encrypted state;
a ROM that stores a BIOS to operate during power up of the authentication device; and
a CPU that loads each of the BIOS, the authentication OS and the operation OS into the main memory individually for running, and having a device connected to be used in the authentication process,
wherein
the BIOS to operate during power up executes a first initialization process to initialize the device in its mode, then loads the authentication OS into the OS operation area;
the authentication OS executes a second initialization process to initialize the device in its mode, performs user authentication of the authentication device by operating the authentication process using the initialized device, writes the decryption key of the operation OS into the shared memory area when the authentication is successful, and then reboots the BIOS while retaining the data in the shared memory area;
the BIOS executes a third initialization process to initialize the device in its mode and loads the operation OS decrypted using the decryption key of the operation OS into the OS operation area; and
the operation OS executes a fourth initialization process to initialize the device in its mode and runs in the main memory.
Other means will be described later.

### Effects of Invention

According to the present invention, it is possible to perform an efficient user authentication for booting PC OS.

### BRIEF DESCRIPTION OF DRAWINGS

FIG.1A depicts a block diagram for a configuration of an information processing system according to an embodiment of the present invention, and FIGs.1B and 1C are explanatory diagrams showing operation overviews.
FIG.2 is a block diagram showing the internal data of the disk device according to an embodiment of the present invention.
FIG.3 is a block diagram showing the internal data of the main memory according to an embodiment of the present invention.
FIG.4 is a flowchart showing a process overview of the information processing apparatus according to an embodiment of the present invention.
FIG.5 is a flowchart showing an installation process procedure according to an embodiment of the present invention.
FIG.6 is a flowchart showing a BIOS process procedure according to an embodiment of the present invention.
FIG.7 is an explanatory diagram showing hardware information to be initialized according to an embodiment of the present invention.
FIG.8 is a flowchart showing a process procedure of the authentication OS according to an embodiment of the present invention.
FIG.9 is an explanatory diagram showing a hook process of interrupt vector addresses according to an embodiment of the present invention.
FIG. 10 is a flowchart showing a process procedure of the operation OS according to an embodiment of the present invention.
FIG.11 is a flowchart showing an operation-OS retrieval process according to an embodiment of the present invention.
FIG. 12 is a flowchart showing a operation-OS device re-initialization process according to an embodiment of the present invention.
FIG. 13 is an explanatory diagram illustrating a user authentication method according to an embodiment of the present invention.

### DETAILED DESCRIPTION OF THE INVENTION

An embodiment of the present invention will be described hereinafter in detail with reference to drawings.

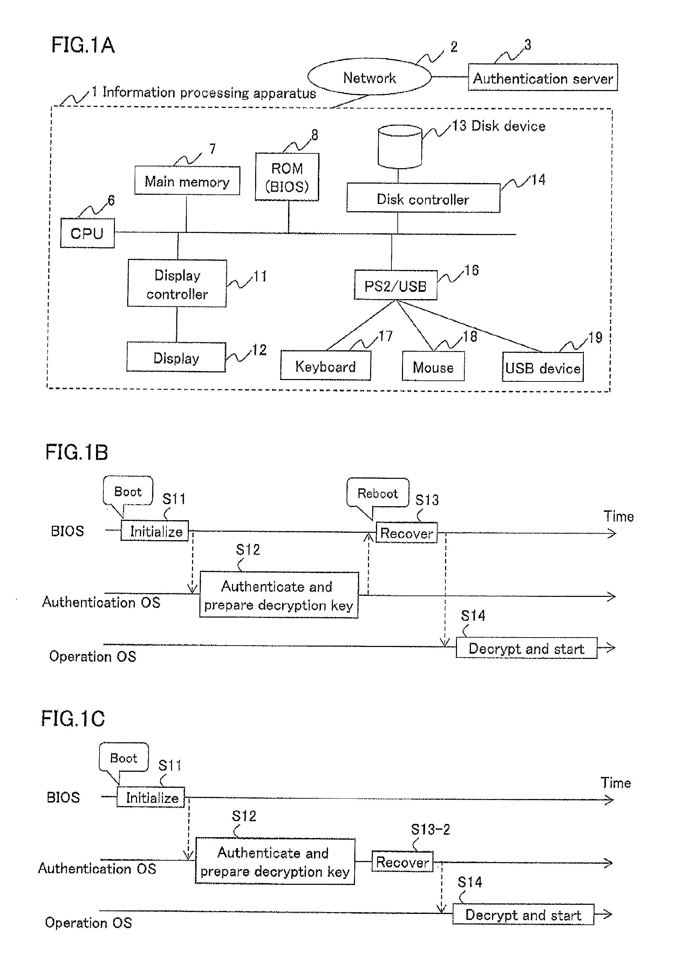

FIGs 1A, 1B and 1C are diagrams showing a configuration and operation overviews of an information processing system.
An information processing apparatus 1 (authentication device) shown in FIG.1A is connected to an authentication server 3 via a network 2.
The information processing apparatus 1 includes a CPU (Central Processing Unit) 6, a main memory 7, a ROM (Read Only Memory) 8, a display controller 11, a display 12, a disk device 13, a disk controller 14, a PS (Personal System) 2/USB (Universal Serial Bus) 16, a keyboard 17, a mouse 18 and a USB device 19.
The BIOS is stored in the ROM 8. In addition, the authentication server 3 stores authentication information and performs user authentication by comparing the authentication information inputted to the information processing apparatus 1 with the stored authentication information above.

FIG.1B is a time chart showing an operation overview of the information processing apparatus 1. As operating units, the BIOS stored in the ROM 8, the authentication OS stored in the disk device 13, and the operation OS stored in the disk device 13 are shown in order from the top, respectively, and the time periods in which each of the OSs is executed by the CPU 6 is represented by rectangles on arrow lines with the operation contents inside ("Initialization" for S11, for example).

First, as a preliminary preparation before the initialization process of S11 is started, image files of each of the operation OS and the authentication OS are provided separately in the disk device 13 (such as dual-boot areas separated in partitions), and at least the operation OS is stored in an encrypted state. The authentication OS may or may not be encrypted.

In addition, as a preliminary preparation, the main memory 7 includes a shared memory area to be specified by the BIOS and other area (referred to as an OS operation area), and the data in both areas are erased when the power is turned off at the information processing apparatus 1. On the other hand, the shared memory area is provided with a mechanism such that its data are not erased despite of the BIOS boot (reboot), but data in the OS operation area are erased at every BIOS boot (reboot).
Here, it is desirable to set the access right to a shared memory area as "writable" for the authentication OS and "read-only" for the operation OS.

At S11, the BIOS initializes each device (a screen, a keyboard 17 or a mouse 18, a disk device 13, a USB equipment 19, and any other device or devices mounted on or connected to the PC necessary for authentication) in its mode (16-bit mode). Then, the BIOS renders the bootloader of the authentication OS to load the authentication OS by executing the bootloader (a program that loads an OS from a disk device then boots it) of the authentication OS.

At S12, the authentication OS provides a variety of user interfaces and advanced authentication means using the keyboard 17, the mouse 18 or the like, by initializing each of the devices of the information processing apparatus 1 in its mode (32-bit mode) and running authentication applications on the authentication OS. Then, the authentication OS saves the decryption key of the operation OS in the shared memory area when user authentication is successful.
Upon completion of the authentication process, the authentication OS reboots the BIOS, in order to revert each device running in its mode to the state initialized by the BIOS.

At S13, the BIOS recovers the state of each of the devices to the same state initialized at S11 in its mode (16-bit mode). Alternatively, the same initialization process may be executed again as S11. Then, the BIOS loads the bootloader of the operation OS into the memory.
At S14, the bootloader of the operation OS decrypts the operation OS by referring to the decryption key for the operation OS in the shared memory area then runs it, since the data in the shared memory area are not erased despite of the BIOS boot (reboot) at S13. Hereinabove, operation overview of the information processing apparatus 1 was described based on FIG.1B.
On the other hand, the operation as indicated in FIG.1C may be executed instead of the operation in FIG.1B. FIG.1C shows an example that the recovery process for the state of each of the devices corresponding to S13 in FIG.1B is executed by the authentication OS instead of the BIOS. Thus, in S13-2, the shared memory area is free from being erased even without having a mechanism for data protection when rebooting the BIOS, by rendering the authentication OS to process device recovery.

Here, as the initialized states of each device (a state available in 16-bit mode) are the same at S11 and S13 when each processing is completed, it is possible to shorten the rebooting process at S13 by performing a rollback process of device status.
Therefore, the authentication OS saves the state of each of the devices initialized by the BIOS at S11 in the shared memory area of the main memory 7, the disk device 13 or the like, prior to performing the authentication process at S12 (a backup process for the rollback).
Then, after performing the authentication process at S12, the authentication OS notifies the BIOS of the status of each of the devices at the backup process, thereby the BIOS does not need to repeat the initialization process of each of the devices executed at S11 also at S13 (the rollback process).

It should be noted that the reason why the authentication OS does not directly call the operation OS at S14 by skipping S13 is that the state of each of the devices after the processing at S12 is in the mode of the authentication OS (in 32-bit mode) and that the operation OS is unable to run in this mode.
In other words, each of the devices (the disk device 13, the main memory 7) needs to be in a state initialized by a BIOS mode (in 16-bit mode) in preparation for loading either one of the authentication OS and the operation OS via the bootloader thereof to the main memory 7 from the disk device 13.

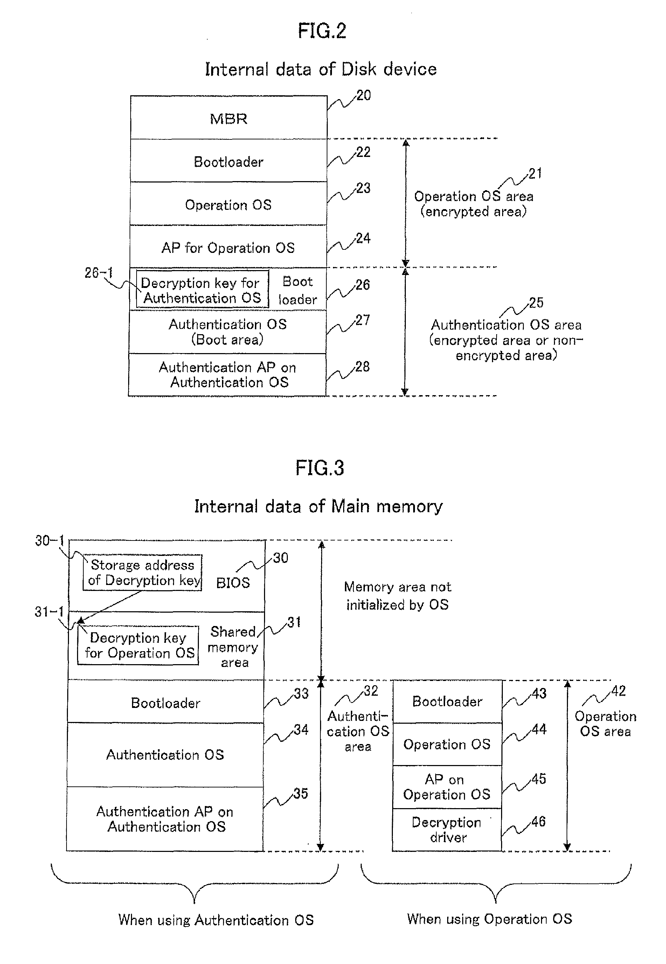

FIG.2 is a block diagram showing the internal data of the disk device. A MBR (Master Boot Record) 20, an operation OS area 21 and an authentication OS area 25 are stored in the disk device 13. The operation OS is an OS used by the information processing apparatus 1 for normal operations, and the authentication OS is an OS to authenticate the operation OS.
The MBR 20 is a sector of the disk device 13 to be retrieved first at startup of the information processing apparatus 1, placed at the beginning of the disk device 13, and recorded with information such as how to boot which OS (the authentication OS or the operation OS) in the disk device 13. The MBR 20 is specified to start the authentication OS at the power-on.

The operation OS area 21 is an area which has at least some part of the data encrypted, and composed of a bootloader 22, an operation OS 23 and operation OS APs (Applications) 24.
The bootloader 22 is one of the boot areas specified by the MBR 20, and a program to start the operation OS 23 after loading from the disk device 13.
The operation OS 23 is an OS to run when user authentication is successful, as described in FIG.1B.
The operation OS APs 24 are various applications to run on the operation OS 23.

The authentication OS area 25 may or may not be encrypted and composed of a bootloader 26, an authentication OS 27 and an authentication AP 28 on the authentication OS.
The bootloader 26 is one of the boot areas specified by the MBR 20, and loads the authentication OS 27 into the main memory 7. Here, when the authentication OS area 25 is encrypted, the bootloader 26 decrypts the authentication OS 27, by referring to a decryption-key-for-authentication-OS 26-1.
The authentication OS 27 is, as described in FIG.1B, is an OS for running the authentication AP 28 on the authentication OS to authenticate the user by determining whether or not the user is allowed to use the operation OS 23.

FIG.3 is a block diagram showing a configuration of the internal data of the main memory.
The main memory 7 is provided with the BIOS 30 and a shared memory area 31. The BIOS 30 operates in 16-bit. The BIOS 30 is provided with a table to set a storage-address-of-decryption-key-for-operation-OS 30-1, in which the address of the decryption-key-for-operation-OS 31-1 is stored.
The BIOS 30 and the shared memory area 31 are not initialized with the OS. In addition, the storage-address-of-decryption-key-for-operation-OS 30-1 is to be predetermined when setting up the system, for being shared between the operation OS and the authentication OS.

On the other hand, there is a difference in the data stored in the remaining area of the main memory 7 ("the OS operation area" in the description of the FIG.1B), excluding the BIOS 30 and the shared memory area 31, between when using the authentication OS 27 and when using the operation OS 23.
When using the authentication OS, an authentication OS area 32 consists of a bootloader 33, an authentication OS 34, and an authentication AP 35 on the authentication OS.
When using the operation OS, an operation OS area 42 consists of a bootloader 43, an operation OS 44, operation OS APs 45 and a decryption driver 46.

The shared memory area 31 is an area accessible from both of the authentication OS 34 and the operation OS 44 to have the operation OS 44 and the authentication OS 34 share information. The decryption-key-for-operation-OS 31-1 is stored in this shared memory area 31 by the authentication OS 34 as the authentication information, and referenced by the operation OS 44.
The operation OS 44 and the authentication OS 34 are able to run in any of 32-bit and 64-bit address extended from the 16-bit address of the BIOS 30, respectively.

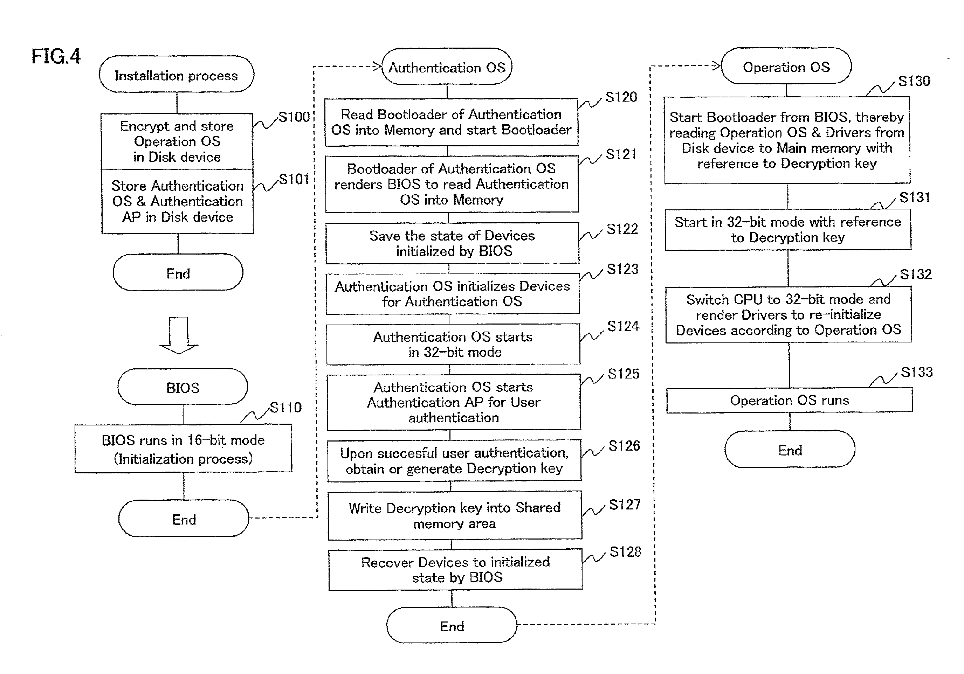

FIG.4 is a flowchart showing a process overview of the information processing apparatus 1.
In the installation processing of the information processing apparatus 1 (prior to the initialization at S11 in FIG.1B), the main body of operation OS is encrypted and stored in the disk device 13 (S100). In addition, the authentication OS and the authentication AP are stored in the disk device 13 (S101).
At the boot of the information processing apparatus 1 (S11 in FIG.1B), the BIOS 30 performs the initial configuration of the basic hardware such as a CPU, a memory and a timer in 16-bit mode, which are all specific to a model (S110).

As shown in the following S120 to S128, the authentication OS 34 (S 12 in FIG.1B) performs the boot process of the authentication OS 27 and the user authentication process by the authentication AP 28 on the authentication OS.

For that purpose, the BIOS 30 first loads the bootloader 26 of the authentication OS into the main memory 7, then starts the bootloader 26 (S120). The bootloader 26 of the authentication OS loads the authentication OS 34 into the main memory 7 using the BIOS 30 (S121). It should be noted that the bootloader 26 decrypts the authentication OS 27 using the decryption-key-for-authentication-OS 26-1, when the authentication OS 27 is encrypted too.

The authentication OS 34 booted as the decrypted authentication OS 27 saves the state of the devices initialized by the BIOS 30 (S122, the backup process described in FIG.1B), initializes various devices (S123), and starts the authentication OS 34 in 32-bit mode (S124). In that case, the BIOS 30 starts the bootloader 26, which in turn loads a kernel of the 32-bit OS, drivers and the like into the main memory 7 from the disk device 13. Further, the 32-bit OS kernel switches the CPU to 32-bit mode, and the drivers re-initialize various devices according to the OS.

The authentication OS 34 starts the authentication AP 35 on the authentication OS, thereby performing the user authentication (S125). Upon successful user authentication, the authentication AP 35 on the authentication OS obtains or generates the decryption-key-for-operation-OS 31-1 (S126), then stores the decryption key in the shared memory area 31 (S127). In this case, the shared memory area 31 is an area specified by the BIOS and unable to be overwritten by the OS. Therefore, it is guaranteed that the operation OS does not initialize the shared memory area 31 that stores the decryption-key-for-operation-OS 31-1.
After stopping the various devices, the authentication OS 34 recovers to the state initialized by the BIOS before its own initialization by the rollback process described in FIG.1B (S128).

First at S128, the BIOS 30 may set the various devices in a condition ready to start the operation OS 44 by performing recovery process to recover to the initialized state, while keeping the decryption-key-for-operation-OS 31-1 stored in the shared memory area 31 (S13 in FIG.1B).
Alternatively at S128, the authentication OS may set the various devices ready to start the operation OS 44 by the authentication OS 34 performing the recovery process to recover to the initialized state, while keeping the decryption-key-for-operation-OS 31-1 in the shared memory area 31 (S13-2 in FIG.1C).
As shown in the following S130 to S133 for the processing by the operation OS 44, the operation OS 44 performs own decryption process and startup process (S14 in FIG.1B).
The BIOS 30 loads the bootloader 43 of the operation OS into the main memory 7 by referring to the decryption-key-for-operation-OS 31-1 stored in the shared memory area 31, and then starts the bootloader 43 (S130).
The bootloader 43 for the operation OS loads the operation OS into the main memory 7 while decrypting the operation OS, by referring to the decryption-key-for-operation-OS 31-1 specified by the BIOS 30 (S131).
The operation OS 44 starts the CPU 6 in 32-bit mode by referring to the decryption-key-for-operation-OS 31-1, and reinitializes each of the devices for the operation OS 44 (S132).
The operation OS 44 runs in the state that each of the devices reinitialized at S132 are available for use (S133).

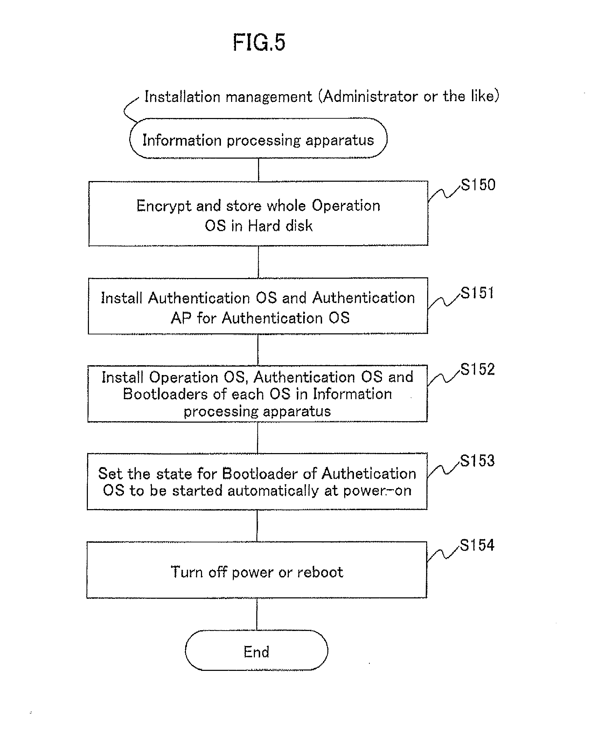

FIG.5 is a flowchart showing an installation procedure of the information processing apparatus 1.
The provider of the information processing apparatus 1 encrypts the operation OS area 21 and stores in the disk device 13 (S150, S100 in FIG.4), then installs the authentication OS 27 and the authentication AP 28 on the authentication OS (S151, S101 in FIG.4).
The provider of the information processing apparatus 1 installs each OS (the operation OS 23, the authentication OS 27) and the corresponding bootloaders 22 and 26, respectively, into the information processing apparatus 1 (S152), rewrites the MBR 20 so as the bootloader 26 for the authentication OS to start automatically after power-on (S153), then turns off the information processing apparatus 1 or reboots the information processing apparatus 1 (S154).

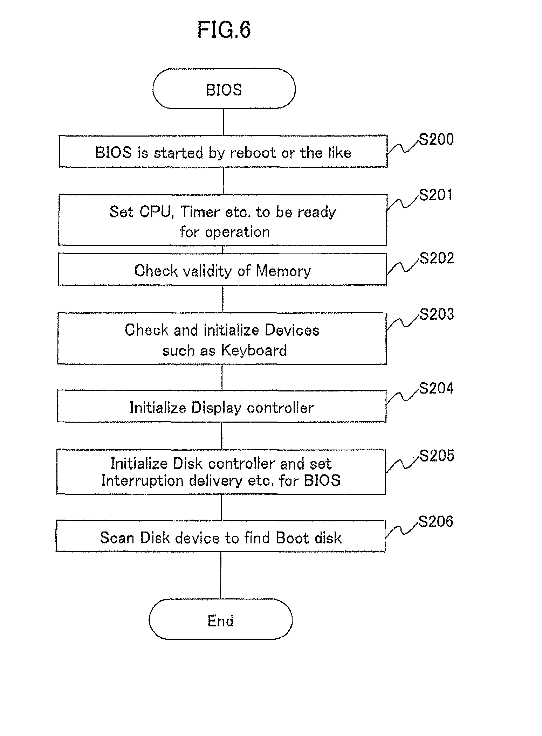

FIG.6 is a flowchart showing a processing procedure of the BIOS (S110 in FIG.4). This flowchart is executed, triggered by completing the installation process shown in FIG.5 (power-on or reboot).
First, the BIOS 30 is started due to reboot or the like (S200).
The BIOS 30 sets hardware such as the CPU and the timer to the operable state (S201), investigates the capacity of the mounted main memory 7 and checks whether or not it can read and write correctly (S202).
The BIOS 30 examines the existence of devices such as the keyboard 17 and the mouse 18, initializes them where necessary (S203), initializes the display controller 11, and displays a message on the display 12 (S204).
The BIOS 30 initializes the disk controller 11 and sets the interruption delivery and the like required for the BIOS (S205), scans the disk device 13 connected to the disk controller 11 to find the boot disk device (S206). As a result, the BIOS30 reads the bootloaders 22, 26 of the OS (the authentication OS or the operation OS) specified in the MBR 20.

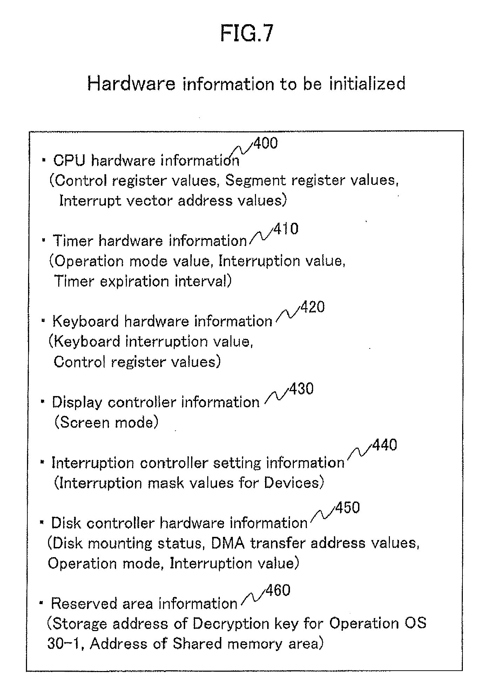

FIG.7 is an explanatory diagram showing hardware information for each of the devices initialized by the BIOS in FIG.6. These will be described below. The hardware information has factory default specified in advance, set by the BIOS 30 at S11, backed up by the authentication OS 34 at S12 and rolled back at S13.
CPU hardware information 400 is composed of control register values, segment register values and interrupt vector address values.
Timer hardware information 410 is composed of an operating mode setting value, an interruption setting value, and a timer expiration interval setting value.
Keyboard hardware information 420 is composed of a keyboard interruption setting value and a control register value.
Information 430 of the display controller 11 is composed of a screen mode setting value.
Configuration information 440 of the interruption controller is composed of interruption mask setting values for each of the devices.
Disk controller hardware information 450 is composed of the presence or absence of the disk device 13, a DMA (Direct Memory Access) transfer address setting value, an operating mode setting value, and an interruption setting value.
Various configuration information for a reserved area (reserved area to be extended from the standard specification) is composed of a variety of data, such as the storage-address-of-the-decryption-key-for-operation-OS 30-1 and address ranges for the shared memory area 31, to be used when running the authentication OS and the operation OS.

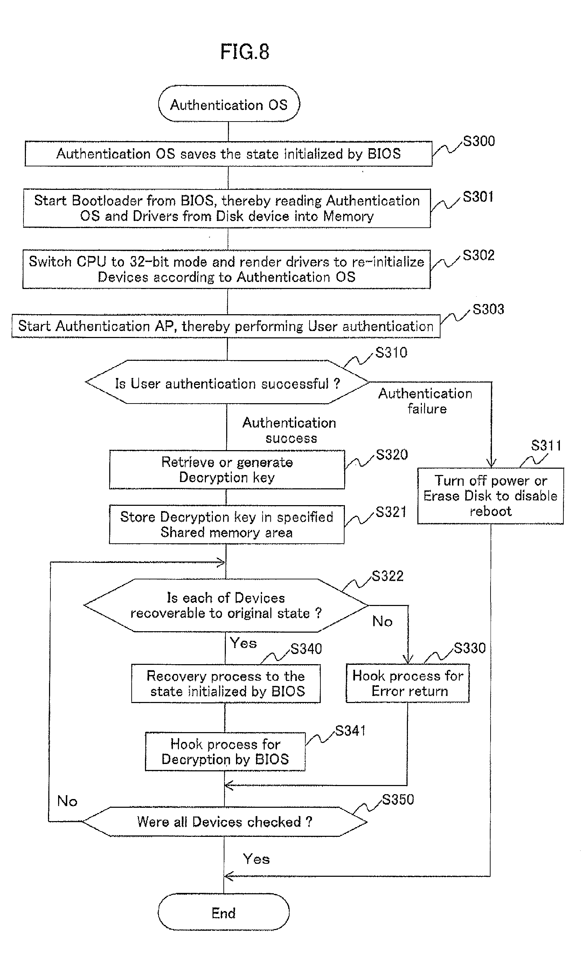

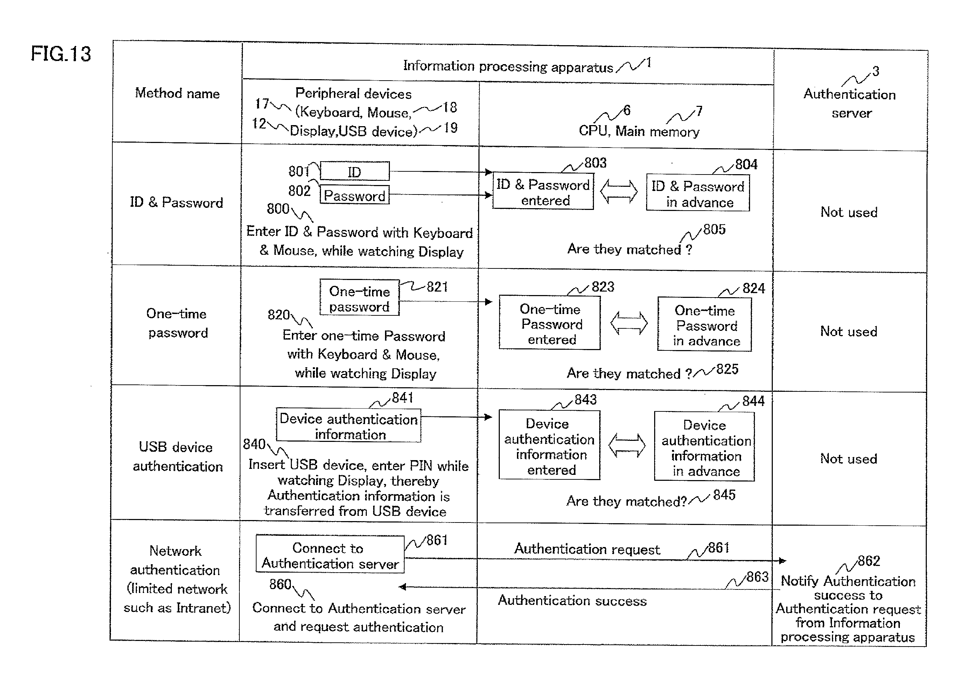

FIG.8 is a flowchart showing a processing procedure of the authentication OS.
The authentication OS 34 saves (backup) the hardware state initialized by the BIOS 30 (S300, S122 in FIG.4).
The authentication OS 34 renders the BIOS 30 to start the bootloader 33, which in turn loads the 32-bit OS 27 and the authentication AP 28 on the authentication OS 27 into the main memory 7 from the disk device 13 (S301, S120 and S121 in FIG.4).
Further, the authentication OS 34 switches the CPU to 32-bit mode and renders device drivers to initialize corresponding devices according to the 32-bit OS (S302, S123 and S124 in FIG.4).
The authentication OS 34 starts the authentication AP 35 on the authentication OS, thereby performing the user authentication (S303, S125 in FIG.4, a specific authentication information processing will be described later in FIG.13).

If the user authentication fails (S310, authentication failure), the power is turned off. Alternatively, the contents of the disk device 13 (such as the data in the operation OS area 21) are erased so as not to be rebooted (S311) and the process is terminated without booting the operation OS 44. In this way, it is possible to prevent the operation OS from being used in the information processing apparatus 1 by unauthorized users.
On the other hand, if the user authentication is successful (S310, authentication success), the authentication AP 28 on the authentication OS retrieves or generates the decryption-key-for-operation-OS 31-1 (S320, S126 in FIG.4). In addition, the authentication OS 34 stores the decryption-key-for-operation-OS 31-1 in the specified shared memory area 31, by referring to the storage-address-of-the-decryption-key-for-operation-OS 30-1 (S321).

Hereinafter, the recovery process (rollback process, S128 in FIG.4) of the hardware state backed up at S300 will be described.
The authentication OS 34 checks whether or not each of the devices can be recovered to the original state (the state initialized by the BIOS) (S322).
If recoverable (Yes at S322), the authentication OS 34 recovers various devices to the state before its initialization (the state initialized by the BIOS) (S340) and performs a hook process for a BIOS call (the decryption process or the like) (S341), as a means for the bootloader 43 of the operation OS to access the operation OS 23. It should be noted that a hook process is to wrest control at the point to jump to the normal processing then perform another process by jumping to another address.
If unrecoverable (No at S322), a hook process is performed for an error return process (S330). As a result, the BIOS will not be able to call for an unrecoverable device. It should be noted that an IC (Integrated Circuit) chip provided with security function such as a TPM (Trusted Platform Module) is often found to be an unrecoverable device.
Processing from S322 to S341 is performed for all devices (S350). Then, the MBR 20 is rewritten so that the bootloader 22 for the operation OS is booted.

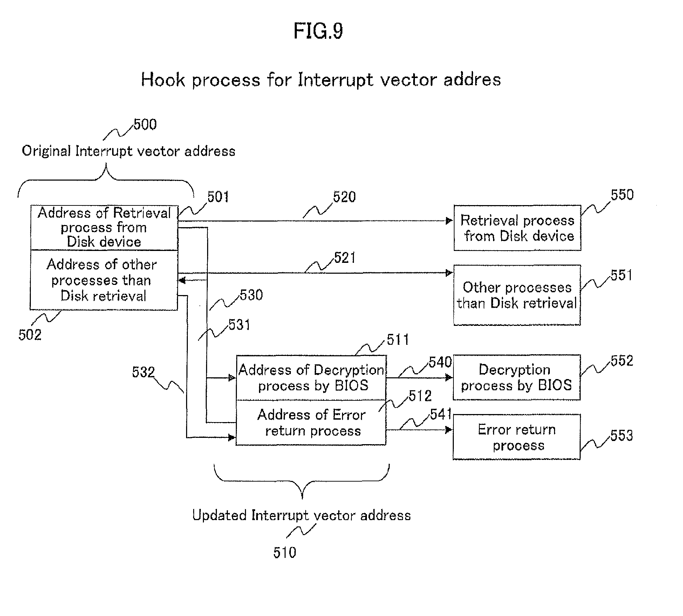

FIG.9 is an explanatory diagram showing a hook process of the interrupt vector addresses (S330, S341).
There is an original interrupt vector address 500 that exists from the beginning, and an updated interrupt vector address 510.
In addition, the original interrupt vector address 500 is divided into a retrieval process from the disk device and the others, thereby being composed of an address-of-retrieval-process-from-disk-device 501 and an address-of-other-processes-than-disk-retrieval 502.
The address-of-retrieval-process-from-disk-device 501 is meant for the original retrieval-process-from-disk-device 550 (arrow 520) for executing the process.

The address-of-other-processes-than-disk-retrieval 502 is meant for the original other-processes-than-disk-retrieval 551 (arrow 521) for executing the process.
The updated interrupt vector address 510 is composed of an address 511 of the decryption process by the BIOS and an address 512 of the error return process.
The address 511 of the decryption process by the BIOS is meant for the decryption process 552 by the BIOS for execution (arrow 540), and the address 512 of the error return process points to the error return process 553 for execution (arrow 541).

The hook process will be described next.
A hook process 530 (corresponding to S341 in FIG.8) rewrites the address of retrieval process from disk device with the address of decryption process by BIOS.
A hook process 531 (corresponding to S330 in FIG.8) rewrites the address of other processes than disk retrieval with the address of error return process.
A hook process 532 rewrites the address of error return process with the address of other processes than disk retrieval.

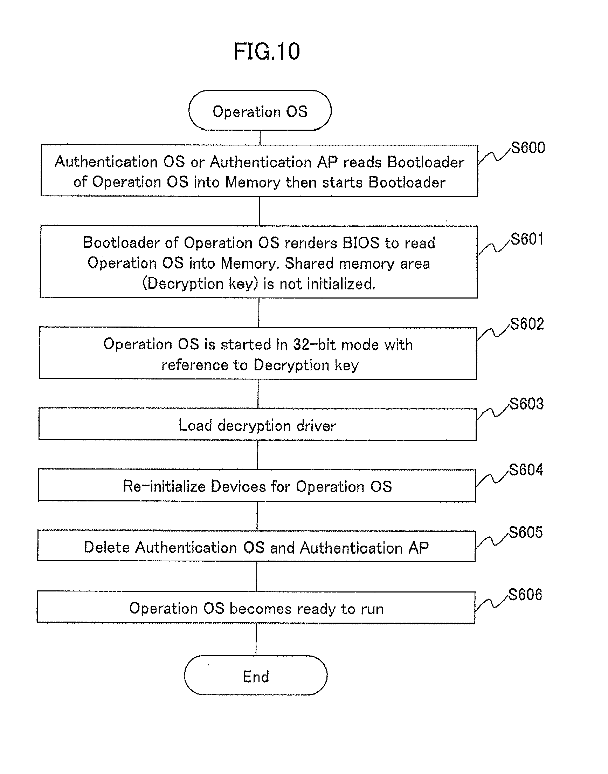

FIG. 10 is a flowchart showing a processing procedure of the operation OS.
The authentication OS 34 or the authentication AP 35 on the authentication OS controls the BIOS having the recovered device state at S128 so as to read the bootloader 43 for the operation OS into the main memory 7 with reference to the decryption-key-for-operation-OS 31-1 then to start the bootloader 43 (S600).
The bootloader 43 for the operation OS 44 renders the BIOS 30 to retrieve the operation OS 44 into the main memory 7, by referring to the decryption-key- for-operation-OS 31-1 (S601). It should be noted that the shared memory area 31 is an area specified by the BIOS as the storage-address-of-decryption-key-for-operation-OS 30-1 and having data not erased even when rebooting OS, therefore the decryption-key-for-operation-OS 31-1 is shareable from the authentication OS to the operation OS.

The operation OS 44 is started in 32-bit mode based on the decryption-key-for-operation-OS 31-1 (S602), and loads the decryption driver 46 of its own (in 32-bit mode) (S603).
After S603, data is decrypted after retrieval by the decryption driver 45 using the decryption-key-for-operation-OS 31-1 when being retrieved from the disk device 13 by the operation OS 44, and reversely data is encrypted before writing when being written into the disk device 13.
The 32-bit OS kernel of the operation OS 44 switches the CPU 6 to 32-bit mode, and re-initializes the various devices according to the OS (S604).

Here, the operation OS 44 may delete the authentication OS 34 and the authentication AP 35 on the authentication OS from the main memory 7 in order to use the main memory 7 effectively, since the user authentication is completed (S605). It should be noted that the authentication OS 34 and the authentication AP 35 on the authentication OS may be kept in the main memory 7.
As a result of the above, the operation OS 44 is started completely and ready to run (S606).

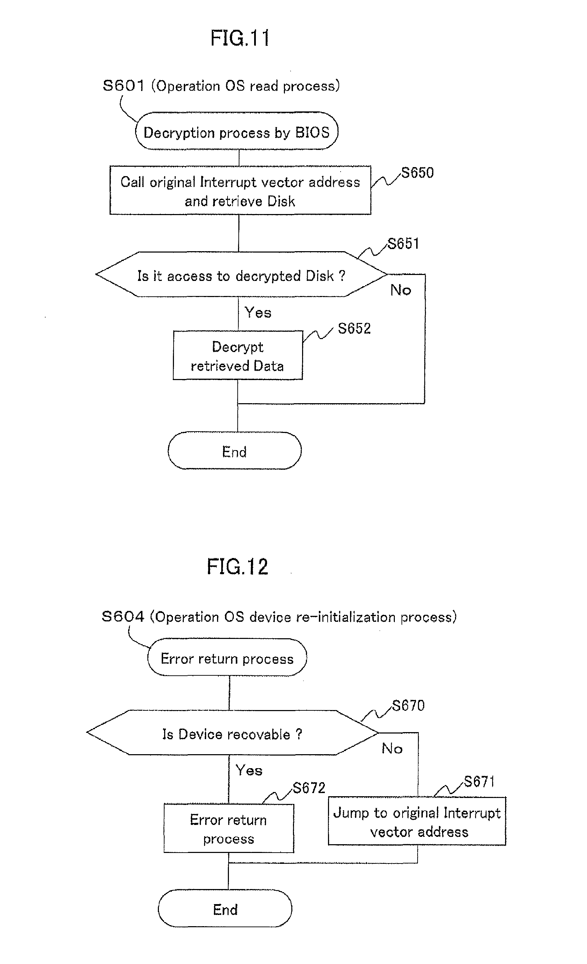

FIG.11 is a flowchart showing the details of the operation-OS retrieval process (S601).
The decryption process for the BIOS performed at S601 calls the original interrupt vector address, and retrieval from the disk is executed (S650). Further, whether or not the access is made to the disk device 13 having encrypted data is checked (S651). If the access is made to the disk device 13 having the encrypted data (Yes at S651), the retrieved data is decrypted (S652).

FIG.12 is a flowchart showing the details of the operation-OS device re-initialization process (S604).
In the error return process at S604, whether or not the access is made to the recoverable device is checked (S670). If recoverable device (Yes at S670), error is returned in the error return process (S672). If not (No at S670), jumping is done to the original interrupt vector address (S671).

FIG. 13 is an explanatory diagram showing the details of the user authentication method (S125) by the authentication AP 28 on the authentication OS. A variety of advanced user authentication is possible with the information processing apparatus 1 using the authentication OS 34, in one or more than one of the authentication methods of (Method 1) through (Method 4) which will be illustrated below.

### (Method 1) ID and Password

Upon entering an ID 801 and a password 802 with the keyboard 17 and the mouse 18 by a user of the information processing apparatus 1 (reference numeral 800), the authentication OS 34 of the information processing apparatus 1 compares an entered "ID and password" 803 with an ID and password 804 stored in advance in the authentication AP 35 on the authentication OS, then determines as "authentication success" (reference numeral 805) if the entered "ID and password" and the "ID and password" stored in advance match. If the entered "ID and password" and the saved "ID and password" do not match, it is determined as "authentication failure".

### (Method 2) One-Time Password

A one-time password 821 is granted to a user of the information processing apparatus 1 in advance. Upon entering the one-time password 821 with the keyboard 17 and the mouse 18 by the user of the information processing apparatus 1 (reference numeral 820), the authentication OS 34 of the information processing apparatus 1 compares an entered one-time password 823 with an one-time password 824 stored in advance in the authentication AP 35 on the authentication OS, then determines as "authentication success" (reference numeral 825) if the entered one-time password and the one-time password stored in advance match. If the entered one-time password and the one-time password stored in advance do not match, it is determined as "authentication failure".

### (Method 3) USB device authentication

A user of the information processing apparatus 1 inserts the USB device 19 for authentication to a USB port of the information processing apparatus, and enters the PIN (Personal Identification Number), a device authentication information 841, with the keyboard 17 and the mouse 18, while watching the display 12. Then, the USB device 19 authenticates the PIN and transfers the device authentication information 841 (reference numeral 840). The authentication AP 35 on the authentication OS compares an entered device authentication information 843 with a device authentication information 844 stored in advance, then determines as "authentication success" (reference numeral 845) if the entered device authentication and the saved device authentication match. If the entered device authentication and the device authentication stored in advance do not match, it is determined as "authentication failure".
As the USB device 19 for authentication, the biometric authentication may be used with a biometric sensor to acquire individual information of the user.

### (Method 4) Network authentication

In the network 2 with the limited communication scope such as a corporate network 2, the authentication server 3 is utilized for authenticating the user of the information processing apparatus 1 efficiently. The information processing apparatus 1 connects to the authentication server 3 (reference numeral 861), then sends an authentication request 861 (reference numeral 860). The authentication server 3 notifies the information processing apparatus 1 of "authentication success" (reference numeral 863) if it is the case (reference numeral 862).

In the present embodiment described hereinabove, a user authentication system was shown wherein the authentication OS performs user authentication then launches the operation OS that takes over the authentication result. Thus, the operation OS cannot be launched unless a user authentication by the authentication OS is cleared, thereby ensuring both security and usability.
In this manner, it is possible to provide variety of user interfaces and advanced authentication methods by using a sophisticated authentication OS for user authentication instead of a low-function BIOS, thereby improving security and usability of a general-purpose PC.

It should be noted that the takeover of an authentication result from the authentication OS to the operation OS is achieved by ensuring a storage area of the authentication result in the shared memory area 31, where the data do not disappear even when the BIOS is rebooted or the operation OS is booted.
On the other hand, a method of placing the authentication result (a hash value, for example) on the ROM (Read Only Memory) or the disk device is at a risk of unauthorized use by a user other than the user who passed the authentication, as the authentication information remains persistently even when the power is turned off.
Further, the other OS cannot take over the information from one OS that booted first by simply recording the authentication result in a memory other than the shared memory area 31, since the memory contents disappear in the operation of booting the other OS.

### Legend for Reference Numerals

| | |
|---|---|
| 1 | Information processing apparatus (Authentication device) |
| 2 | Network |
| 3 | Authentication server |
| 6 | CPU |
| 7 | Main memory |
| 8 | ROM |
| 11 | Display controller |
| 12 | Display |
| 13 | Disk device |
| 14 | Disk controller |
| 16 | PS2/USB |
| 17 | Keyboard |
| 18 | Mouse |
| 19 | USB device |
| 20 | MBR |
| 21 | Operation OS area |
| 22 | Bootloader |
| 23 | Operation OS |
| 24 | AP for operation OS |
| 25 | Authentication OS area |
| 26 | Bootloader |
| 26-1 | Decryption key for authentication OS |
| 27 | Authentication OS |
| 28 | Authentication AP for authentication OS |
| 30 | BIOS |
| 30-1 | Storage address of decryption key for operation OS |
| 31 | Shared memory area |
| 31-1 | Decryption key for operation OS |
| 32 | Authentication OS area |
| 33 | Bootloader |
| 34 | Authentication OS |
| 35 | Authentication AP for authentication OS |
| 42 | Operation OS area |
| 43 | Bootloader |
| 44 | Operation OS |
| 45 | AP for operation OS |
| 46 | Decryption driver |

## Claims

1. An authentication device, for running an operation OS based on a result of an authentication process that runs on an authentication OS, comprising:
a main memory having an OS operation area, in which the authentication OS and the operation OS are loaded, and a shared memory area, in which a decryption key of the operation OS obtained as a result of the authentication process is stored;
a disk device having both of a storage area for the authentication OS and a storage area in which the operation OS in an encrypted state is stored;
a ROM that stores a BIOS being started to operate during power up of the authentication device; and
a CPU that loads each of the BIOS, the authentication OS and the operation OS into the main memory individually for running,
and being connected to a device to be used in the authentication process,
wherein
the BIOS to operate during power up executes a first initialization process to initialize the device in its mode, then loads the authentication OS into the OS operation area;
the authentication OS executes a second initialization process to initialize the device in its mode, performs user authentication of the authentication device by operating the authentication process using the initialized device, writes the decryption key of the operation OS into the shared memory area when the authentication is successful, and then reboots the BIOS while retaining the data in the shared memory area;
the BIOS executes a third initialization process to initialize the device in own mode and loads the operation OS decrypted using the decryption key of the operation OS into the OS operation area; and
the operation OS executes a fourth initialization process to initialize the device in its mode and runs in the main memory.

2. The authentication device according to claim 1,
wherein, instead of having the BIOS executing the third initialization process,
the authentication OS performs a backup process to save the state of the devices initialized at the first initialization process, before executing the second initialization process; and
the BIOS, when rebooted, performs a rollback process to recover the backed up state of the devices at the first initialization process.

3. The authentication device according to claim 1,
wherein, instead of the BIOS executing the third initialization process,
the authentication OS performs
a backup process to save the state of the devices initialized at the first initialization process, before executing the second initialization process; and
a rollback process to recover the backed up state of the devices at the first initialization process.

4. The authentication device according to claim 1,
wherein the CPU, using an authentication information having a combination of an ID and a password entered using the initialized devices of a keyboard and a mouse in the authentication process performed on the authentication OS, determines as successful authentication when an entered authentication information and an authentication information stored in advance are matched.

5. The authentication device according to claim 1,
wherein the CPU, using an authentication information having a one-time password entered using the initialized devices of a keyboard and a mouse in the authentication process performed on the authentication OS, determines as successful authentication when an entered authentication information and an authentication information stored in advance are matched.

6. The authentication device according to claim 1,
wherein the CPU, using an authentication information having a PIN (Personal Identification Number) entered using the initialized devices of a keyboard and a mouse in the authentication process performed on the authentication OS, determines as successful authentication when an entered authentication information and an authentication information in the initialized device of a USB device for authentication inserted to the authentication device are matched.

7. The authentication device according to claim 1,
wherein the CPU, in the authentication process performed on the authentication OS, determines as successful authentication when the result of authentication by an authentication server connected to the authentication device via a network is successful.

8. An authentication method, executed by an authentication device for running an operation OS based on a result of an authentication process that runs on an authentication OS,
wherein the authentication device comprises:
a main memory having an OS operation area, in which the authentication OS and the operation OS are loaded, and a shared memory area, in which a decryption key of the operation OS obtained as a result of the authentication process is stored;
a disk device having both of a storage area for the authentication OS and a storage area in which the operation OS in an encrypted state is stored;
a ROM that stores a BIOS being started to operate during power up of the authentication device; and
a CPU that loads each of the BIOS, the authentication OS and the operation OS into the main memory individually for running,
and is connected to a device to be used in the authentication process, wherein
the BIOS to operate during power up executes a first initialization process to initialize the device in its mode, then loads the authentication OS into the OS operation area;
the authentication OS executes a second initialization process to initialize the device in its mode, performs user authentication of the authentication device by operating the authentication process using the initialized device, writes the decryption key of the operation OS into the shared memory area when the authentication is successful, and then reboots the BIOS while retaining the data in the shared memory area;
the BIOS executes a third initialization process to initialize the device in own mode and loads the operation OS decrypted using the decryption key of the operation OS into the OS operation area; and
the operation OS executes a fourth initialization process to initialize the device in its mode and runs in the main memory.
